# EUROPEAN PATENT APPLICATION

(11) **EP 3 812 246 A1**
(43) Date of publication of application: **28.04.2021**
(21) Application number: 19823281.1
(22) Date of filing: 11.06.2019
(51) Int. Cl.: B62D 25/00, B62D 25/24

(54) **CHARGING CONNECTOR SUPPORTING STRUCTURE AND CHARGING DEVICE**

(30) Priority: 19.06.2018 CN 201810627925
(71) Applicant: BYD Company Limited, Guangdong 518118 (CN)
(72) Inventor: WU, Xingguo, Shenzhen, Guangdong 518118 (CN); LI, Zhen, Shenzhen, Guangdong 518118 (CN); WANG, Hongjun, Shenzhen, Guangdong 518118 (CN); MA, Aiguo, Shenzhen, Guangdong 518118 (CN); LI, Hao, Shenzhen, Guangdong 518118 (CN)
(74) Representative: m patent group
(86) International application number: PCT/CN2019/090734
(87) International publication number: WO 2019/242532

(57) **Abstract**

A charging connector support structure (A) and a charging device (B) are provided. The charging connector support structure (A) includes a fixing frame (5), a transmission mechanism (6), and a rotatable support arm assembly (7). The fixing frame (5) is disposed on an inner side of a vehicle body skin (1). The rotatable support arm assembly (7) and the transmission mechanism (6) are disposed on the fixing frame (5). An input side of the transmission mechanism (6) is connected to a charging cap (4) covering a charging socket (3). An output side of the transmission mechanism (6) is connected to the rotatable support arm assembly (7). The rotation of the charging cap (4) is transmitted to the rotatable support arm assembly (7) through the transmission mechanism (6) to drive the rotatable support arm assembly (7) to switch back and forth between an initial state and a support state. The rotatable support arm assembly (7) can support the charging connector (2) inserted into the charging socket (3) when the rotatable support arm assembly is in the support state.

## Description

### CROSS-REFERENCE TO RELATED APPLICATIONS

This application is the National Phase of International Application No. PCT/CN2019/090734, filed on June 11, 2019, which based on and claims priority to Chinese Patent Application No. 201810627925.7 filed on June 19, 2018. The contents of the above-referenced application are incorporated herein by reference in its entirety.

### FIELD

This application relates to the field of alternative fuel vehicle technology, and particularly to a charging connector support structure and a charging device.

### BACKGROUND

Currently, the use of conventional vehicles causes energy problems and environmental problems. Alternative fuel vehicles use alternative fuels as power sources and have great advantages of energy conservation and environmental friendliness. Therefore, alternative fuel vehicles keep growing and become comparable to conventional vehicles. The pare of alternative fuel vehicle keeps increasing. However, an alternative fuel vehicle needs to replenish battery power through charging. A drawback of the alternative fuel vehicle is that a time period of charging is long.

At present, a commonly used solution is to increase a charging power to shorten a charging time. In an existing solution, a cross-sectional area of a wire harness of a charging connector needs to be increased to deal with the impact of a large current on the wire harness, resulting in an increase in the mass of the wire harness. Especially, a high-power charging alternative fuel coach has a heavier wire harness. During the charging of an alternative fuel coach, after a charging connector is inserted into a charging socket, no auxiliary mechanism is used to support the charging connector, and manual support is not practical. Therefore, the weight of the charging connector and the weight of the wire harness are both loaded on the charging socket. In addition, the entire vehicle also has a relatively long charging time. Therefore, an interface of the charging socket is often pulled and damaged by the charging connector, resulting in a series of potential safety hazards. A well-equipped charging station separately provides a shelf to support a wire harness. However, the shelf is large and heavy and requires additional placement by workers, resulting in complex operations.

### SUMMARY

A technical problem to be resolved by this application is to provide a charging connector support structure and a charging device for the technical problem that a charging connector is likely to pull and damage an interface of a charging socket, resulting in potential safety hazards during the charging of an existing alternative fuel vehicle.

To resolve the foregoing technical problem, according to an aspect, an embodiment of this application provides a charging connector support structure, including a fixing frame, a transmission mechanism, and a rotatable support arm assembly, the fixing frame being disposed on an inner side of a vehicle body skin, the rotatable support arm assembly and the transmission mechanism being disposed on the fixing frame, an input side of the transmission mechanism being connected to a charging cap covering a charging socket, an output side of the transmission mechanism being connected to the rotatable support arm assembly, the rotation of the charging cap being transmitted to the rotatable support arm assembly through the transmission mechanism to drive the rotatable support arm assembly to switch back and forth between an initial state and a support state, the rotatable support arm assembly being capable of supporting the charging connector inserted into the charging socket when the rotatable support arm assembly is in the support state.

According to the charging connector support structure of the embodiments of this application, the fixing frame is disposed on the inner side of the vehicle body skin, the rotatable support arm assembly and the transmission mechanism are disposed on the fixing frame, and the rotation of the charging cap is transmitted to the rotatable support arm assembly through the transmission mechanism. When the charging cap is opened and the rotatable support arm assembly is rotated to the support state, the rotatable support arm assembly can support the charging connector inserted into the charging socket, so that the weight of the charging connector and the weight of the wire harness are loaded on the rotatable support arm assembly, thereby reducing the weight of the charging connector and the weight of the wire harness that are loaded on the charging socket, reducing the probability that the interface of the charging socket is pulled and damaged by the charging connector, extending the service life of the interface of the charging socket, and in addition, preventing the charging connector from falling off from the charging socket. After the charging connector is charged, the charging cap is closed, the rotatable support arm assembly is rotated to the initial state, and the rotatable support arm assembly is rotated to the fixing frame. The charging connector support structure uses the original charging cap on the charging socket to complete the back-and-forth switching of the rotatable support arm assembly between the initial state and the support state without increasing manual workload. In addition, the charging connector support structure is simple, and has convenient installation, high practicality, and low maintenance costs.

In some embodiments, the transmission mechanism includes a transmission rod, a gear set, and a transmission rack, the gear set includes a cap gear, an intermediate gear, and a transmission gear, the cap gear, the intermediate gear, and the transmission gear are rotatably connected to the fixing frame, the transmission rod is fixed on the cap gear, the cap gear is engaged with the intermediate gear, the intermediate gear is engaged with the transmission gear, the transmission gear is engaged with the transmission rack, and the rotatable support arm assembly is provided with a ring gear engaged with the transmission rack.

In some embodiments, a side, away from the vehicle body skin, of the fixing frame is provided with a limit slot, and the transmission rack is slidably disposed inside the limit slot.

In some embodiments, the rotatable support arm assembly includes a central column, a support arm, a spring support arm, and a spring, the central column is rotatably connected to the fixing frame, the support arm is hinged to the central column, the support arm swings vertically relative to the central column, one end of the spring support arm is connected to the central column, the other end of the spring support arm is connected to one end of the spring, and the other end of the spring is connected to the support arm.

In some embodiments, the support arm includes a connecting arm and a front support base, one end of the connecting arm is connected to the central column, the other end of the connecting arm is fixedly connected to the front support base, a front end surface of the front support base is an inclined surface, an upper end surface of the front support base is a horizontal plane, and when the rotatable support arm assembly is in the support state, the inclined surface and the horizontal plane abut the bottom of the charging connector.

In some embodiments, the upper end surface of the front support base is provided with at least one first pressure sensor, and the front end surface of the front support base is provided with at least one second pressure sensor.

In some embodiments, the support arm in the initial state is accommodated on the fixing frame, and the support arm may pass through a first through hole in the vehicle body skin to reach the support state.

In some embodiments, the fixing frame is provided with a lower bearing mounting hole, the rotatable support arm assembly further includes a lower bearing, the central column is provided with a lower fixing column, a second through hole, and the ring gear, the ring gear is disposed on a periphery of the central column, the ring gear is located between the lower fixing column and the second through hole, an inner ring of the lower bearing is in interference fit with the lower fixing column, an outer ring of the lower bearing is in interference fit with the lower bearing mounting hole, and an end of the support arm is hinged inside the second through hole.

In some embodiments, the rotatable support arm assembly further includes an upper bearing, the fixing frame further includes a mounting base, the mounting base is provided with an upper bearing mounting hole, the central column further includes an upper fixing column, the upper fixing column is located above the second through hole, an inner ring of the upper bearing is in interference fit with the upper fixing column, an outer ring of the upper bearing is in interference fit with the upper bearing mounting hole, and a lower end of the mounting base is fixed on an upper end of the limit slot.

According to another aspect, an embodiment of this application provides a charging device, including a charging socket, a charging connector, and a charging connector support structure according to the foregoing descriptions, the charging connector being in pluggable fit with the charging socket.

According to the charging device in this embodiment of this application, the charging connector support structure is used to support the charging connector that is in pluggable fit with the charging socket, so that the weight of the charging connector and the weight of the wire harness are loaded on the rotatable support arm assembly, thereby reducing the weight of the charging connector and the weight of the wire harness that are loaded on the charging socket, reducing the probability that the interface of the charging socket is pulled and damaged by the charging connector, extending the service life of the interface of the charging socket, and in addition, preventing the charging connector from falling off from the charging socket.

In some embodiments, a rotatable support arm assembly includes a central column, a support arm, a spring support arm, and a spring, the central column is rotatably connected to a fixing frame, the support arm is hinged to the central column, the support arm swings vertically relative to the central column, one end of the spring support arm is connected to the central column, the other end of the spring support arm is connected to one end of the spring, and the other end of the spring is connected to the support arm.

In some embodiments, the support arm includes a connecting arm and a front support base, one end of the connecting arm is connected to the central column, the other end of the connecting arm is fixedly connected to the front support base, a front end surface of the front support base is an inclined surface, an upper end surface of the front support base is a horizontal plane, and when the rotatable support arm assembly is in the support state, the inclined surface and the horizontal plane abut the bottom of the charging connector; and

the bottom of the charging connector is provided with a positioning boss, and when the rotatable support arm assembly is in the support state, the positioning boss is crimped to the horizontal plane.

### BRIEF DESCRIPTION OF THE DRAWINGS

FIG. 1 is a schematic diagram of a charging device according to an embodiment of this application;
FIG. 2 is another schematic diagram of a charging device according to an embodiment of this application;
FIG. 3 is a schematic diagram of a charging connector support structure according to an embodiment of this application;
FIG. 4 is a schematic exploded view of a charging connector support structure according to an embodiment of this application; and
FIG. 5 is a schematic exploded view of a rotatable support arm assembly according to an embodiment of this application.

Reference numerals of the specification are as follows:
A. charging connector support structure; B. charging device; 1. vehicle body skin; 11. first through hole; 2. charging connector; 21. positioning boss; 3. charging socket; 4. charging cap; 5. fixing frame; 51. limit slot; 52. lower bearing mounting hole; 53. mounting base; 531. upper bearing mounting hole; and 532. third through hole;
6. transmission mechanism; 61. transmission rod; 62. gear set; 621. cap gear; 622. intermediate gear; 623. transmission gear; and 63. transmission rack; and
7. rotatable support arm assembly; 71. central column; 711. lower fixing column; 712. second through hole; 713. ring gear; 714. mounting hole; 715. upper fixing column; 72. support arm; 721. connecting arm; 722. front support base; 7221. front end surface; 7222. upper end surface; 7223. lower end surface; 7224. first pressure sensor; 7225. second pressure sensor; 73. spring support arm; 74. spring; 75. lower bearing; 76. upper bearing; 77. first rotating shaft; 78. second rotating shaft; and 79. third rotating shaft.

### DETAILED DESCRIPTION

To make the technical problems resolved by this application, technical solutions, and advantageous effects clearer and more comprehensible, the following further describes this application in detail with reference to the accompanying drawings and embodiments. It is to be understood that the specific embodiments described herein are merely used for describing this application, but are not intended to limit this application.

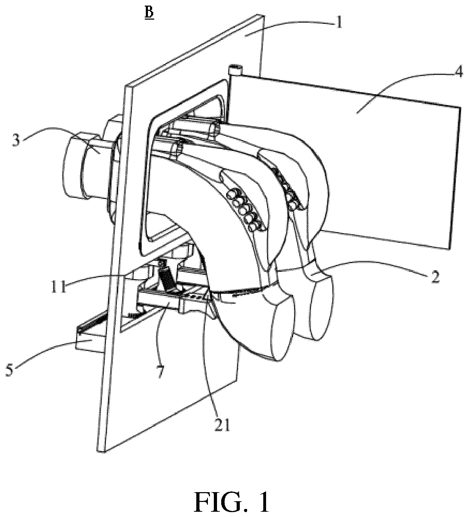

As shown in FIG. 1 to FIG. 5, an embodiment of this application provides a charging connector support structure A, including a fixing frame 5, a transmission mechanism 6, and a rotatable support arm assembly 7. The fixing frame 5 is disposed on an inner side of a vehicle body skin 1. The rotatable support arm assembly 7 and the transmission mechanism 6 are disposed on the fixing frame 5. An input side of the transmission mechanism 6 is connected to a charging cap 4 covering a charging socket 3. An output side of the transmission mechanism 6 is connected to the rotatable support arm assembly 7. The rotation of the charging cap 4 is transmitted to the rotatable support arm assembly 7 through the transmission mechanism 6 to drive the rotatable support arm assembly 7 to switch back and forth between an initial state and a support state. The rotatable support arm assembly 7 can support the charging connector 2 inserted into the charging socket 3 when the rotatable support arm assembly is in the support state.

According to the charging connector support structure A of this embodiment of this application, the fixing frame 5 is disposed on the inner side of the vehicle body skin 1. The rotatable support arm assembly 7 and the transmission mechanism 6 are disposed on the fixing frame 5. The rotation of the charging cap 4 is transmitted to the rotatable support arm assembly 7 through the transmission mechanism 6. When the charging cap 4 is opened and the rotatable support arm assembly 7 is rotated to the support state, the rotatable support arm assembly 7 can support the charging connector 2 inserted into the charging socket 3, so that the weight of the charging connector 2 and the weight of the wire harness are loaded on the rotatable support arm assembly 7, thereby reducing the weight of the charging connector 2 and the weight of the wire harness that are loaded on the charging socket 3, reducing the probability that the interface of the charging socket 3 is pulled and damaged by the charging connector 2, extending the service life of the interface of the charging socket 3, and in addition, preventing the charging connector 2 from falling off from the charging socket 3. After the charging connector 2 is charged, the charging cap 4 is closed, the rotatable support arm assembly 7 is rotated to the initial state, and the rotatable support arm assembly 7 is rotated to the fixing frame 5. The charging connector support structure A uses the original charging cap 4 on the charging socket 3 to complete the back-and-forth switching of the rotatable support arm assembly 7 between the initial state and the support state without increasing manual workload. In some embodiments, the charging connector support structure A is simple, and has convenient installation, high practicality, and low maintenance costs.

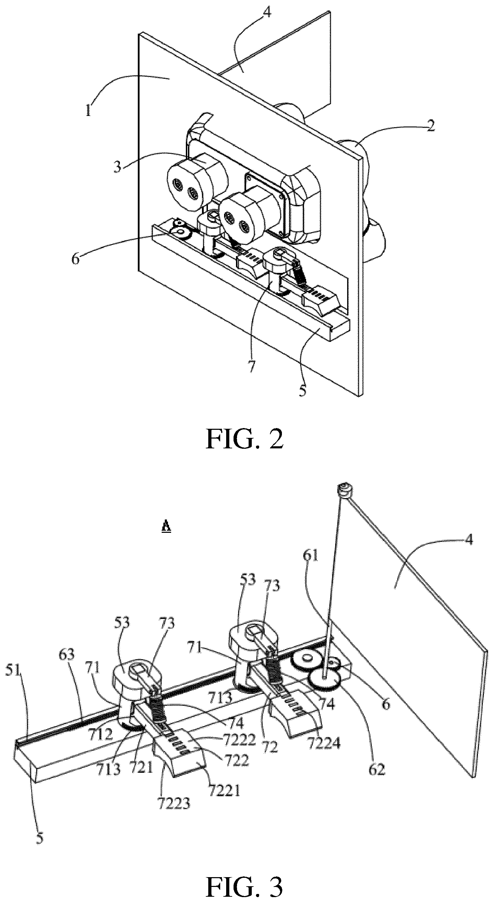

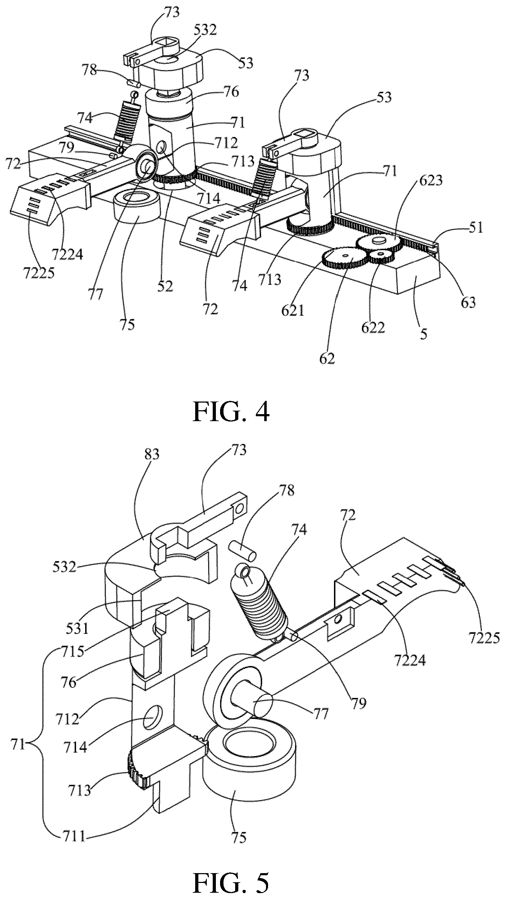

As shown in FIG. 3 and FIG. 4, in an embodiment, the transmission mechanism 6 includes a transmission rod 61, a gear set 62, and a transmission rack 63. The gear set 62 includes a cap gear 621, an intermediate gear 622, and a transmission gear 623. The cap gear 621, the intermediate gear 622, and the transmission gear 623 are rotatably connected to the fixing frame 5. The transmission rod 61 is fixed on the cap gear 621. The cap gear 621 is engaged with the intermediate gear 622. The intermediate gear 622 is engaged with the transmission gear 623. The transmission gear 623 is engaged with the transmission rack 63. The rotatable support arm assembly 7 is provided with a ring gear 713 engaged with the transmission rack 63. The rotation of the charging cap 4 drives the transmission rod 61 to rotate. The rotation of the transmission rod 61 drives the cap gear 621, the intermediate gear 622, and the transmission gear 623 to rotate. The rotation of the transmission gear 623 drives the transmission rack 63 to slide. The slide of the transmission rack 63 drives the ring gear 713 on the rotatable support arm assembly 7 to rotate, thereby implementing the back-and-forth switching of the rotatable support arm assembly 7 between the initial state and the support state.

In an embodiment, the gear set 62 may be replaced by another structure, provided that the rotation of the transmission rod 61 can be transmitted to the transmission rack 63. For example, the gear set 62 may be replaced by a gear. The rotation of the transmission rod 61 drives the gear to rotate. The rotation of the gear drives the transmission rack 63 to slide, thereby implementing the back-and-forth switching of the rotatable support arm assembly 7 between the initial state and the support state. In another example, the gear set 62 may be replaced by two gears. The rotation of the transmission rod 61 is transmitted to the transmission rack 63 through the two gears, thereby implementing the back-and-forth switching of the rotatable support arm assembly 7 between the initial state and the support state.

As shown in FIG. 1 to FIG. 4, in an embodiment, a side, away from the vehicle body skin 1, of the fixing frame 5 is provided with a limit slot 51. The transmission rack 63 is slidably disposed inside the limit slot 51. The limit slot 51 may restrict the transmission rack 63 from moving toward sides away from or close to the vehicle body skin 1, and may restrict the transmission rack 63 from moving vertically relative to the fixing frame 5, so that the transmission rack 63 can be engaged with the ring gear 713 on the rotatable support arm assembly 7.

As shown in FIG. 3 to FIG. 5, in an embodiment, the rotatable support arm assembly 7 includes a central column 71, a support arm 72, a spring support arm 73, and a spring 74. The central column 71 is rotatably connected to the fixing frame 5. The support arm 72 is hinged to the central column 71. The support arm 72 swings vertically relative to the central column 71. One end of the spring support arm 73 is connected to the central column 71. The other end of the spring support arm 73 is connected to one end of the spring 74. The other end of the spring 74 is connected to the support arm 72. The transmission rack 63 is engaged with the ring gear 713 of the rotatable support arm assembly 7. The support arm 72 may rotate in the horizontal direction to implement the back-and-forth switching between the initial state and the support state. The support arm 72 is hinged to the central column 71, and may implement the rotation of the support arm 72 in the vertical direction. The central column 71 is connected to the spring support arm 73. The spring 74 is connected between the spring support arm 73 and the support arm 72. The support arm 72 may be reset by using the spring 74. The spring 74 may also limit the support arm 72 to better control the rotation angle of the support arm 72.

As shown in FIG. 3 to FIG. 5, in an embodiment, the support arm 72 includes a connecting arm 721 and a front support base 722. One end of the connecting arm 721 is connected to the central column 71. The other end of the connecting arm 721 is fixedly connected to the front support base 722. A front end surface 7221 of the front support base 722 is an inclined surface. An upper end surface 7222 of the front support base 722 is a horizontal plane. When the rotatable support arm assembly 7 is in the support state, the inclined surface (that is, the front end surface 7221) and the horizontal plane (that is, the upper end surface 7222) abut the bottom of the charging connector 2. The front support base 722 is made of a somewhat flexible material, so that when the inclined surface and the horizontal plane abut the bottom of the charging connector 2, the collision between the front support base 722 and the charging connector 2 can be alleviated, and the front support base 722 and the charging connector 2 are better protected. The flexible material may be rubber or another flexible material.

As shown in FIG. 3 to FIG. 5, in an embodiment, the lower end surface 7223 of the front support base 722 is a curved surface. The lower end surface 7223 of the front support base 722 is a curved surface, so that the front support base 722 is strengthened. In addition, the structure of the front support base 722 can be simplified.

As shown in FIG. 3 to FIG. 5, in an embodiment, the upper end surface 7222 of the front support base 722 is provided with at least one first pressure sensor 7224. The front end surface 7221 of the front support base 722 is provided with at least one second pressure sensor 7225. When the upper end surface 7222 abuts the bottom of the charging connector 2, the first pressure sensor 7224 may measure the pressure applied by the charging connector 2 on the upper end surface 7222 of the front support base 722. Within a limited time, if the pressure value measured by the first pressure sensor 7224 fluctuates greatly, it can be determined that the contact between the charging connector 2 and the upper end surface 7222 of the front support base 722 is abnormal. When the front end surface 7221 abuts the bottom of the charging connector 2, the second pressure sensor 7225 may measure the pressure applied by the charging connector 2 on the front end surface 7221 of the front support base 722. Within a limited time, if the pressure value measured by the second pressure sensor 7225 fluctuates greatly, it can be determined that the contact between the charging connector 2 and the front end surface 7221 of the front support base 722 is abnormal.

For reasons such as the damage of the support arm 72 and the impact on the charging connector 2 or a cable by an external force, the charging connector 2 is likely to be displaced. However, the charging connector 2 does not fall off from the charging socket 3. The charging connector 2 still charges normally. However, the charging connector 2 tends to fall off from the charging socket 3. In this case, the first pressure sensor 7224 and the second pressure sensor 7225 may be used to measure changes of pressure values applied by the charging connector 2 on the upper end surface 7222 and the front end surface 7221 of the front support base 722 to determine whether the charging connector 2 may fall off from the charging socket 3. The first pressure sensor 7224 and the second pressure sensor 7225 are both connected to a main control module. When both the pressure values measured by the first pressure sensor 7224 and the second pressure sensor 7225 are abnormal, the main control module gives a voice prompt to inform a charging worker to perform examination, thereby preventing the charging connector 2 from falling off from the charging socket 3.

In an embodiment, the first pressure sensor 7224 may be an F-series pressure sensor, and the second pressure sensor 7225 may be an M-series pressure sensor.

As shown in FIG. 1 and FIG. 2, in an embodiment, the support arm 72 in the initial state is accommodated on the fixing frame 5, and the support arm 72 may pass through a first through hole 11 on the vehicle body skin 1 to reach the support state. The first through hole 11 is disposed on the vehicle body skin 1 to facilitate the back-and-forth switching of the support arm 72 between the initial state and the support state. When the charging connector support structure A is not used, the support arm 72 may be accommodated on the fixing frame 5 without affecting the appearance of the vehicle.

As shown in FIG. 4 and FIG. 5, in an embodiment, the fixing frame 5 is provided with a lower bearing mounting hole 52. The rotatable support arm assembly 7 further includes a lower bearing 75. The central column 71 is provided with a lower fixing column 711, a second through hole 712, and the ring gear 713. The ring gear 713 is disposed on a periphery of the central column 71. The ring gear 713 is located between the lower fixing column 711 and the second through hole 712. An inner ring of the lower bearing 75 is in interference fit with the lower fixing column 711. An outer ring of the lower bearing 75 is in interference fit with the lower bearing mounting hole 52. An end of the support arm 72 is hinged inside the second through hole 712.

As shown in FIG. 4 and FIG. 5, in an embodiment, the rotatable support arm assembly 7 further includes a first rotating shaft 77. A hole wall of the second through hole 712 is provided with two mounting holes 714 that are opposite to each other. The first rotating shaft 77 is connected inside the mounting hole 714. An end of the support arm 72 is rotatably connected to the central column 71 by the first rotating shaft 77.

As shown in FIG. 4 and FIG. 5, in an embodiment, the rotatable support arm assembly 7 further includes an upper bearing 76. The fixing frame 5 further includes a mounting base 53. The mounting base 53 is provided with an upper bearing mounting hole 531. The central column 71 further includes an upper fixing column 715. The upper fixing column 715 is located above the second through hole 712. An inner ring of the upper bearing 76 is in interference fit with the upper fixing column 715. An outer ring of the upper bearing 76 is in interference fit with the upper bearing mounting hole 531. A lower end of the mounting base 53 is fixed on an upper end of the limit slot 51. The ring gear 713 is engaged with the transmission rack 63. The slide of the transmission rack 63 drives the ring gear 713 to rotate, thereby rotating the central column 71. To prevent the central column 71 from shaking during the rotation, the mounting base 53 is fixed between the central column 71 and the limit slot 51.

As shown in FIG. 4 and FIG. 5, in an embodiment, the mounting base 53 is provided with a third through hole 532 that is the same as the upper bearing mounting hole 531. An upper end of the upper fixing column 715 extends out of the third through hole 532 and is fixedly connected to an end of the spring support arm 73. The rotatable support arm assembly 7 further includes a second rotating shaft 78 and a third rotating shaft 79. One end of the spring support arm 73 is connected to the upper fixing column 715. The other end of the spring support arm 73 is connected (for example, fixedly connected) to the second rotating shaft 78. The third rotating shaft 79 is connected (for example, fixedly connected) to the connecting arm 721. One end of the spring 74 is hinged to the second rotating shaft 78, and the other end of the spring 74 is hinged to the third rotating shaft 79.

As shown in FIG. 1 to FIG. 4, in an embodiment, the fixing frame 5 is provided with a plurality of rotatable support arm assemblies 7. The plurality of rotatable support arm assemblies 7 are connected to an output side of the transmission mechanism 6. The fixing frame 5 is provided with the plurality of rotatable support arm assemblies 7 that may simultaneously support a plurality of charging connectors 2 inserted into the charging socket 3. Moreover, when one of the rotatable support arm assemblies 7 fails, other rotatable support arm assemblies 7 may be used to support the charging connectors 2 without affecting the use of the charging connectors 2.

As shown in FIG. 1 and FIG. 2, another embodiment of this application provides a charging device B, including a charging socket 3, a charging connector 2, and the charging connector support structure A according to the foregoing embodiments. The charging connector 2 is in pluggable fit with the charging socket 3.

According to the charging device B in this embodiment of this application, the charging connector support structure A is used to support the charging connector 2 that is in pluggable fit with the charging socket 3, so that the weight of the charging connector 2 and the weight of the wire harness are loaded on the rotatable support arm assembly 7, thereby reducing the weight of the charging connector 2 and the weight of the wire harness that are loaded on the charging socket 3, reducing the probability that the interface of the charging socket 3 is pulled and damaged by the charging connector 2, extending the service life of the interface of the charging socket 3, and in addition, preventing the charging connector 2 from falling off from the charging socket 3.

As shown in FIG. 3 to FIG. 5, the rotatable support arm assembly 7 includes a central column 71, a support arm 72, a spring support arm 73, and a spring 74. The central column 71 is rotatably connected to a fixing frame 5. The support arm 72 is hinged to the central column 71. The support arm 72 swings vertically relative to the central column 71. One end of the spring support arm 73 is connected to the central column 71. The other end of the spring support arm 73 is connected to one end of the spring 74. The other end of the spring 74 is connected to the support arm 72.

As shown in FIG. 3 to FIG. 5, the support arm 72 includes a connecting arm 721 and a front support base 722. One end of the connecting arm 721 is connected to the central column 71. The other end of the connecting arm 721 is fixedly connected to the front support base 722. A front end surface 7221 of the front support base 722 is an inclined surface. An upper end surface 7222 of the front support base 722 is a horizontal plane. When the rotatable support arm assembly 7 is in the support state, the inclined surface and the horizontal plane abut the bottom of the charging connector 2.

As shown in FIG. 1, the bottom of the charging connector 2 is provided with a positioning boss 21. When the rotatable support arm assembly 7 is in the support state, the positioning boss 21 is crimped to the horizontal plane. When the charging connector 2 is inserted into the charging socket 3, the support arm 72 supports the charging connector 2, and the positioning boss 21 is disposed on the charging connector 2, to enable the charging connector 2 to be more stably crimped to the horizontal plane, so that more stable horizontal docking of the charging connector 2 and the charging socket 3 can be implemented, and the probability that the charging socket 3 is compressed by the charging connector 2 is reduced. In some embodiments, after the charging connector 2 is crimped to the support arm 72, when the position of the support arm 72 is adjusted by using the spring 74, a position where the charging connector 2 is inserted into the charging socket 3 may also be adjusted indirectly. In addition, the support arm 72 is suitable for supporting charging connectors 2 with different sizes, and has a wide range of applications.

The working principle of supporting the charging connector 2 inserted into the charging socket 3 by the charging connector support structure A is as follows:

The charging cap 4 is first opened. The rotation of the charging cap 4 is transmitted to the ring gear 713 on the central column 71 through the transmission mechanism 6. The rotation of the ring gear 713 drives the support arm 72 to rotate from the initial state to the support state. When the support arm 72 is in the support state, in this case, the charging connector 2 is inserted into the charging socket 3, and the bottom of the charging connector 2 abuts the support arm 72. After the charging connector 2 is charged, the charging connector 2 is pulled out, the charging cap 4 is closed, and the support arm 72 is restored to the initial state, that is, the support arm 72 is accommodated on the fixing frame 5 of the inner side of the vehicle body skin 1.

The foregoing descriptions are merely preferred embodiments of this application, but are not intended to limit this application. Any modification, equivalent replacement and improvement made within the spirit and principle of this application shall fall within the protection scope of this application.

## Claims

1. A charging connector support structure, comprising a fixing frame, a transmission mechanism, and a rotatable support arm assembly, wherein the fixing frame is disposed on an inner side of a vehicle body skin, the rotatable support arm assembly and the transmission mechanism are disposed on the fixing frame, an input side of the transmission mechanism is connected to a charging cap covering a charging socket, an output side of the transmission mechanism is connected to the rotatable support arm assembly, a rotation of the charging cap is transmitted to the rotatable support arm assembly through the transmission mechanism to drive the rotatable support arm assembly to switch between an initial state and a support state, the rotatable support arm assembly supports the charging connector inserted into the charging socket when the rotatable support arm assembly is in the support state.

2. The charging connector support structure according to claim 1, wherein the transmission mechanism comprises a transmission rod, a gear set, and a transmission rack, the gear set comprises a cap gear, an intermediate gear, and a transmission gear, the cap gear, the intermediate gear, and the transmission gear are rotatably connected to the fixing frame, the transmission rod is fixed on the cap gear, the cap gear is engaged with the intermediate gear, the intermediate gear is engaged with the transmission gear, the transmission gear is engaged with the transmission rack, and the rotatable support arm assembly is provided with a ring gear engaged with the transmission rack.

3. The charging connector support structure according to claim 2, wherein a side, away from the vehicle body skin, of the fixing frame is provided with a limit slot, and the transmission rack is slidably disposed inside the limit slot.

4. The charging connector support structure according to claim 2 or 3, wherein the rotatable support arm assembly comprises a central column, a support arm, a spring support arm, and a spring, the central column is rotatably connected to the fixing frame, the support arm is hinged to the central column, the support arm swings vertically relative to the central column, one end of the spring support arm is connected to the central column, the other end of the spring support arm is connected to one end of the spring, and the other end of the spring is connected to the support arm.

5. The charging connector support structure according to claim 4, wherein the support arm comprises a connecting arm and a front support base, one end of the connecting arm is connected to the central column, the other end of the connecting arm is fixedly connected to the front support base, a front end surface of the front support base is an inclined surface, an upper end surface of the front support base is a horizontal plane, and when the rotatable support arm assembly is in the support state, the inclined surface and the horizontal plane abut the bottom of the charging connector.

6. The charging connector support structure according to claim 5, wherein the upper end surface of the front support base is provided with at least one first pressure sensor, and the front end surface of the front support base is provided with at least one second pressure sensor.

7. The charging connector support structure according to any one of claims 4 to 6, wherein the support arm in the initial state is accommodated on the fixing frame, and the support arm is capable of passing through a first through hole in the vehicle body skin to reach the support state.

8. The charging connector support structure according to any one of claims 4 to 7, wherein the fixing frame is provided with a lower bearing mounting hole, the rotatable support arm assembly further comprises a lower bearing, the central column is provided with a lower fixing column, a second through hole, and the ring gear, the ring gear is disposed on a periphery of the central column, the ring gear is located between the lower fixing column and the second through hole, an inner ring of the lower bearing is in interference fit with the lower fixing column, an outer ring of the lower bearing is in interference fit with the lower bearing mounting hole, and an end of the support arm is hinged inside the second through hole.

9. The charging connector support structure according to claim 8, wherein the rotatable support arm assembly further comprises an upper bearing, the fixing frame further comprises a mounting base, the mounting base is provided with an upper bearing mounting hole, the central column further comprises an upper fixing column, the upper fixing column is located above the second through hole, an inner ring of the upper bearing is in interference fit with the upper fixing column, an outer ring of the upper bearing is in interference fit with the upper bearing mounting hole, and a lower end of the mounting base is fixed on an upper end of the limit slot.

10. A charging device, comprising a charging socket, a charging connector, and the charging connector support structure according to any one of claims 1 to 9, the charging connector being in pluggable fit with the charging socket.

11. The charging device according to claim 10, wherein a rotatable support arm assembly comprises a central column, a support arm, a spring support arm, and a spring, the central column is rotatably connected to a fixing frame, the support arm is hinged to the central column, the support arm swings vertically relative to the central column, one end of the spring support arm is connected to the central column, the other end of the spring support arm is connected to one end of the spring, and the other end of the spring is connected to the support arm.

12. The charging connector support structure according to claim 11, wherein the support arm comprises a connecting arm and a front support base, one end of the connecting arm is connected to the central column, the other end of the connecting arm is fixedly connected to the front support base, a front end surface of the front support base is an inclined surface, an upper end surface of the front support base is a horizontal plane, and when the rotatable support arm assembly is in a support state, the inclined surface and the horizontal plane abut the bottom of the charging connector; and
the bottom of the charging connector is provided with a positioning boss, and when the rotatable support arm assembly is in the support state, the positioning boss is crimped to the horizontal plane.
